# EUROPEAN PATENT SPECIFICATION

(11) **EP 2 981 003 B1**
(45) Date of publication and mention of the grant of the patent: **19.02.2020**
(21) Application number: 14775173.9
(22) Date of filing: 06.01.2014
(51) Int. Cl.: H04B 10/2557, H04B 10/54, H04J 14/02

(54) **LIGHTWAVE COMMUNICATION SYSTEM**
LICHTWELLENÜBERTRAGUNGSSYSTEM
SYSTÈME DE COMMUNICATION À ONDES LUMINEUSES

(30) Priority: 29.03.2013 JP 2013070873
(43) Date of publication of application: 03.02.2016
(73) Proprietor: NEC Corporation, Tokyo 108-8001 (JP)
(72) Inventor: NAKANO, Takehiro, Tokyo 108-8001 (JP)
(74) Representative: Plasseraud IP
(86) International application number: PCT/JP2014/050021
(87) International publication number: WO 2014/156203

(56) References cited:
- JP-A- H0 583 203
- JP-A- H02 119 328
- JP-A- H08 298 486
- JP-A- 2006 050 640
- JP-A- 2009 213 160
- JP-A- 2013 165 407
- T.SUGIHARA ET AL.: '43 Gb/s DQPSK pre- equalization employing 6-bit, 43GS/s DAC integrated LSI for cascaded ROADM filtering' 2010 CONFERENCE ON OPTICAL FIBER COMMUNICATIOR (OFC), COLLOCATED NATIONAL FIBER OPTIC ENGINEERS CONFERENCE 21 March 2010, pages 1 - 3, XP031677222

## Description

### [Technical Field]

The present invention relates to an optical communication system, an optical transmitting device, an optical transmitting method, and an optical transmitting program.

### [Background Art]

An optical communication system that transmits phase modulated signal lights having a plurality of wavelengths multiplexed with an intensity modulated signal light has been proposed (for example, refer to PTL 1). In an optical communication system described in PTL 1, rise/fall of an intensity modulated signal light waveform is rounded by adding wavelength dispersion to the intensity modulated signal light. Thus, the optical communication system described in PTL 1 suppresses adjacent channel crosstalk that occurs when a phase modulated signal light and an intensity modulated signal light are mixed.

### [Citation List]

### [Patent Literature]

[PTL 1] Japanese Patent Application Laid-Open No. 2009-213160

### [Summary of Invention]

### [Technical Problem]

In fiber-optic communication, application of an over 40Gbps or 100Gbps digital coherent signal light composed of polarization-multiplexed phase modulated signals as a main signal has become widespread. In fiber-optic communication using digital coherent signal lights with a plurality of wavelengths, an intensity modulated light may be wavelength-multiplexed onto a main signal wavelength for use of other than main signal communication. In general, transient rise time and transient fall time of an intensity modulated light are respectively less than several hundreds of nsec. Therefore, there is a problem that the sharp rise/fall of the intensity modulated light causes a fluctuation in phase and polarization state of the main signal, leading to a burst error on the main signal due to an optical receiving device being unable to accommodate a phase fluctuation or a polarization fluctuation.

In the optical communication system described in PTL 1, an intensity modulated light is a high speed main signal such as a 2.5Gbps and a 10Gbps signals, simultaneously multiplexed with a polarization-multiplexed phase modulated signal such as a 40Gbps and a 100Gbps signals. Since such an intensity modulated light repeats intensity changes steadily at high speed, the impact of the intensity modulated light on phase change and polarization change in a transmission line is averaged, and does not make such a great impact as to cause a burst error on the polarization multiplexed signal or the phase modulated signal, regardless of whether or not rounding of rise/fall of a waveform described in PTL 1 is implemented.

On the other hand, an intensity modulated light for use of other than a main signal, wavelength-multiplexed with a phase modulated light, generally has a rate of the order of MHz or below and exhibits sporadic intensity change compared with a rate of a phase modulated signal. In this case, a polarization multiplexed signal or a phase modulated signal is subject to a phase fluctuation or a polarization fluctuation at the timing of rise/fall and the fluctuation rate is so high compared with a tracking rate of an optical receiving device. Therefore, the optical receiving device cannot accommodate the phase fluctuation or the polarization fluctuation.

The present invention solves the aforementioned problem and provides an optical communication system, an optical transmitting device, an optical transmitting method, and an optical transmitting program, enabling an optical receiving device to accommodate a phase fluctuation and a polarization fluctuation.

### [Solution to Problem]

An optical communication system according to the present invention includes an optical transmitting device that transmits a wavelength multiplexed signal light in which an intensity modulated signal light with transient rise time and transient fall time respectively being a predetermined constant value or above and at least one digital coherent signal light are multiplexed, and an optical receiving device that receives a wavelength multiplexed signal light transmitted from the optical transmitting device.

The optical transmitting device according to the present invention includes at least one digital coherent signal transmitting unit that transmits a digital coherent signal light, an intensity modulated signal transmitting unit that transmits an intensity modulated signal light with transient rise time and transient fall time respectively being a predetermined constant value or above, and an optical multiplexing unit that multiplexes a digital coherent signal light from the digital coherent signal transmitting unit and an intensity modulated signal light from the intensity modulated signal transmitting unit.

An optical transmitting method according to the present invention includes a signal transmitting step of transmitting at least one digital coherent signal light and an intensity modulated signal light with transient rise time and transient fall time respectively being a predetermined constant value or above, and a multiplexing step of multiplexing a digital coherent signal light and an intensity modulated signal light transmitted in the signal transmitting step.

An optical transmitting program according to the present invention is a program for causing a computer to execute a signal transmitting step in which at least one digital coherent signal transmitting unit transmits at least one digital coherent signal light and an intensity modulated signal transmitting unit transmits an intensity modulated signal light with transient rise time and transient fall time respectively being a predetermined constant value or above, and a multiplexing step of multiplexing a digital coherent signal light and an intensity modulated signal light generated in the signal generating step.

### [Advantageous Effects of Invention]

The present invention can provide an optical communication system, an optical transmitting device, an optical transmitting method, and an optical transmitting program, enabling an optical receiving device to accommodate a phase fluctuation and a polarization fluctuation.

### [Brief Description of Drawings]

[Fig. 1] Fig. 1 illustrates an example of an optical communication system according to a first exemplary embodiment.
[Fig. 2] Fig. 2 illustrates an example of an optical communication method according to the first exemplary embodiment.
[Fig. 3] Fig. 3 illustrates an example of a pulse waveform of an intensity modulated signal light Sd.
[Fig. 4] Fig. 4 illustrates a signal light So when transient rise time and transient fall time are not determined.
[Fig. 5] Fig. 5 illustrates an example of an amount of Q-factor degradation of a digital coherent signal light Sp in an optical receiving device 102 when transient rise time and transient fall time are not determined.
[Fig. 6] Fig. 6 illustrates an example of an amount of Q-factor degradation of the digital coherent signal light Sp in the optical receiving device 102 when the intensity modulated signal light Sd according to the present exemplary embodiment is used.
[Fig. 7] Fig. 7 illustrates an example of an optical transmitting device 101 according to a second exemplary embodiment.
[Fig. 8] Fig. 8 illustrates an example of an optical transmitting method according to the second exemplary embodiment.
[Fig. 9] Fig. 9 illustrates an example of an intensity modulated signal transmitting unit 12 according to a third exemplary embodiment.
[Fig. 10] Fig. 10 illustrates an example of a transmitting method of an intensity modulated signal light Sd in a signal transmitting step Sill according to the third exemplary embodiment.
[Fig. 11] Fig .11 illustrates examples of signals according to the third exemplary embodiment: Fig. 11 (a) illustrates a pulse signal Sb output from a surveillance control signal generating unit 121, Fig. 11 (b) illustrates a pulse signal Sc output from a drive waveform shaping unit 122, and Fig. 11 (c) illustrates a pulse light Sd output from a pulse light generating unit 123.
[Fig. 12] Fig. 12 illustrates an example of an intensity modulated signal transmitting unit 12 according to a fourth exemplary embodiment.
[Fig. 13] Fig. 13 illustrates another example of the intensity modulated signal transmitting unit 12 according to the fourth exemplary embodiment.
[Fig. 14] Fig. 14 illustrates an example of an intensity modulated signal transmitting unit 12 according to a fifth exemplary embodiment.
[Fig. 15] Fig. 15 illustrates another example of the intensity modulated signal transmitting unit 12 according to the fifth exemplary embodiment.
[Fig. 16] Fig. 16 illustrates an example of an optical communication system according to a sixth exemplary embodiment.

### [Description of Embodiments]

Exemplary embodiments of the present invention will be described with reference to the accompanying drawings. The present invention is not limited to the exemplary embodiments described below. The examples are merely exemplary and the present invention may be implemented in various variations and modifications based on knowledge of those skilled in the art. Further, throughout the present description and the drawings, components denoted by the same reference signs are identical to each other.

### (First Exemplary Embodiment)

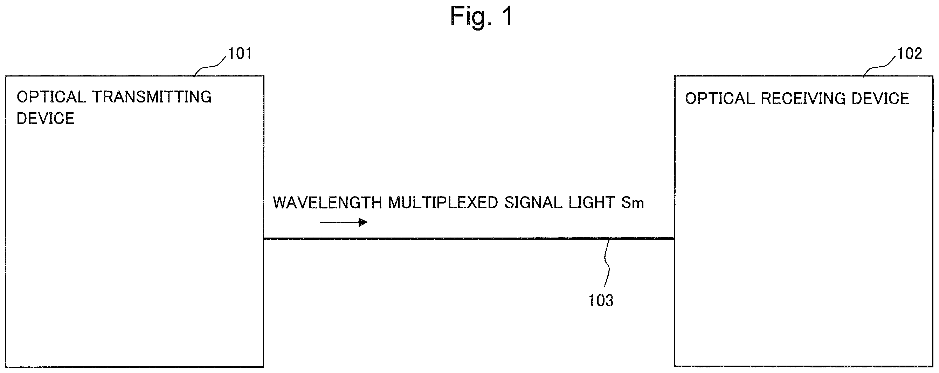

Fig. 1 illustrates an example of an optical communication system according to the present exemplary embodiment. The optical communication system according to the present exemplary embodiment includes an optical transmitting device 101, an optical receiving device 102, and an optical fiber transmission line 103.

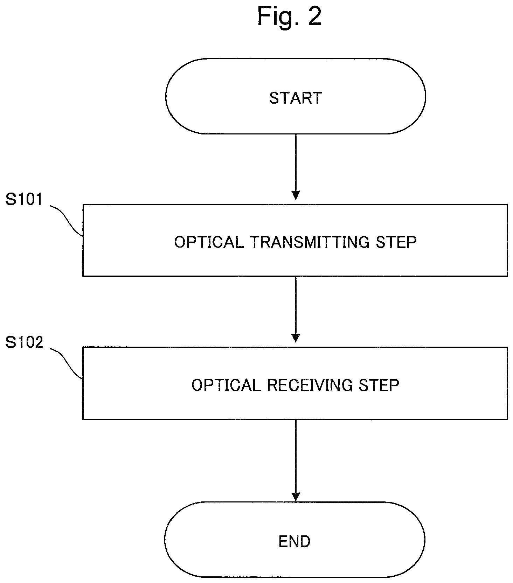

Fig. 2 illustrates an example of an optical communication method according to the present exemplary embodiment. The optical communication method according to the present exemplary embodiment includes an optical transmitting step S101 and an optical receiving step S102.

In the optical transmitting step S101, the optical transmitting device 101 transmits a wavelength multiplexed signal light Sm in which an intensity modulated signal light Sd and a digital coherent signal light Sp are multiplexed. The intensity modulated signal light Sd is an ON-OFF-Keying based pulse light with transient rise time and transient fall time respectively being a constant value or above. The digital coherent signal light Sp is a main signal adopting a digital (coherent) demodulation technology and may be a signal light combining polarization multiplexing and phase multiplexing or a signal light combining intensity modulation in addition to polarization multiplexing and phase multiplexing. The optical fiber transmission line 103 transmits a wavelength multiplexed signal combined by the optical transmitting device 101 to the optical receiving device 102.

In the optical receiving step S102, the optical receiving device 102 receives the wavelength multiplexed signal light Sm transmitted from the optical transmitting device 101.

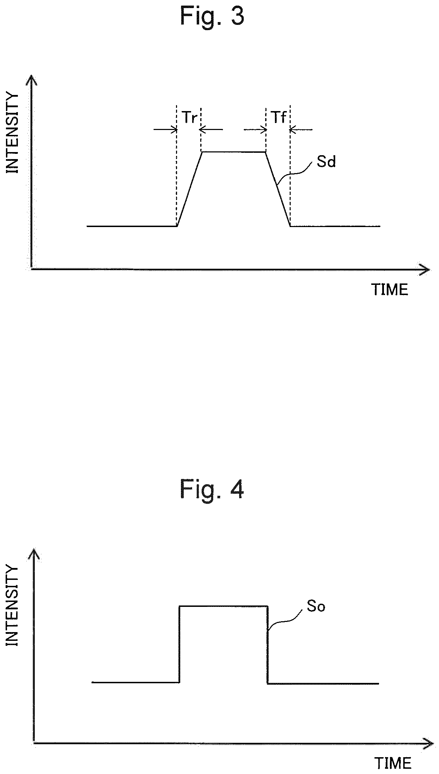

Fig. 3 illustrates an example of a pulse waveform of the intensity modulated signal light Sd. Fig. 4 illustrates a signal light So when transient rise time and transient fall time are not determined. The transient rise time Tr and the transient fall time Tf of the intensity modulated signal light Sd are respectively a predetermined constant value or above. As for the signal light So illustrated in Fig. 4, for which transient rise time and transient fall time are not determined, the transient rise time and the transient fall time are respectively as short as several hundreds of nsec or below.

The transient rise time Tr and the transient fall time Tf are set to 1 µsec or above, respectively, in order to avoid a sharp phase fluctuation and a sharp polarization fluctuation of the digital coherent signal light Sp caused by the intensity modulated signal light Sd.

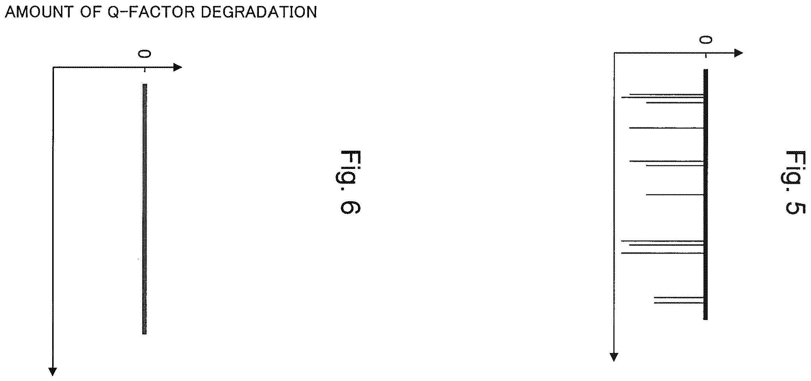

Fig. 5 illustrates an example of an amount of Q-factor degradation of the digital coherent signal light Sp in the optical receiving device 102 when transient rise time and transient fall time are not determined. The intensity modulated signal light Sd wavelength-multiplexed with the digital coherent signal light Sp may cause a nonlinear refractive index change in the optical fiber transmission line 103 by an ON/OFF operation thereof and may change a phase and a polarization state of the wavelength of the digital coherent signal light Sp. The optical receiving device 102 has tolerance against such degradation factors. However, when rise or fall of a pulse light is sharp, a phase fluctuation and a polarization fluctuation given to the digital coherent signal light Sp also becomes sharp. Thus, the phase fluctuation and the polarization fluctuation of the digital coherent signal light Sp exceeds a tracking rate of a DSP (Digital Signal Processor) in the optical receiving device 102 and cause a burst error in the optical receiving device 102 when receiving the digital coherent signal light Sp as illustrated in Fig. 5 due to loss of synchronization or the like.

Fig. 6 illustrates an example of an amount of Q-factor degradation of the digital coherent signal light Sp in the optical receiving device 102 when the intensity modulated signal light Sd according to the present exemplary embodiment is used. The transient rise time Tr and the transient fall time Tf of the intensity modulated signal light Sd according to the present exemplary embodiment are respectively determined to be a constant value or above that is sufficiently longer than a limit of the tracking rate in the optical receiving device 102. Thus, the optical receiving device 102 is able to compensate for the phase fluctuation and the polarization fluctuation, and therefore is able to mitigate an impact of the intensity modulated signal light Sd on the digital coherent signal light Sp as illustrated in Fig. 6.

As described above, the optical communication system or the optical communication method according to the present exemplary embodiment is capable of suppressing degradation of the digital coherent signal light Sp since the optical receiving device 102 can accommodate the phase fluctuation and the polarization fluctuation by determining the transient rise time Tr and the transient fall time Tf of the intensity modulated signal light Sd to be a constant value or above, respectively.

### (Second Exemplary Embodiment)

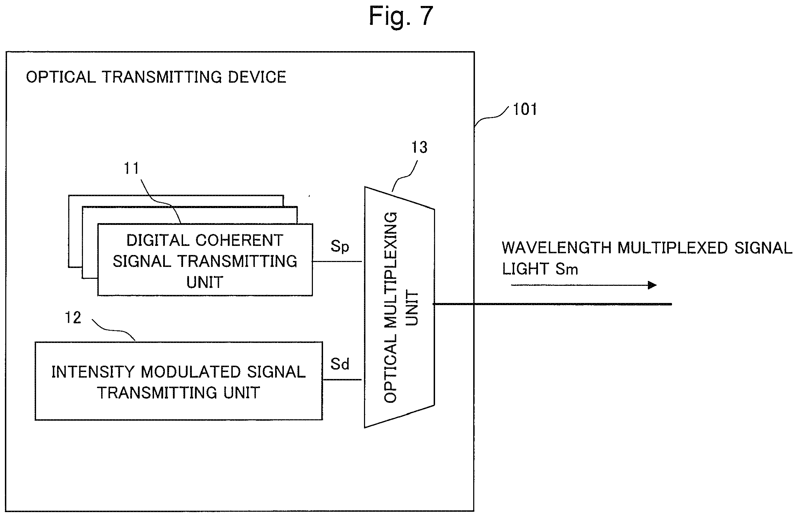

Fig. 7 illustrates an example of an optical transmitting device 101 according to the present exemplary embodiment. The optical transmitting device 101 according to the present exemplary embodiment includes at least one digital coherent signal transmitting unit 11, an intensity modulated signal transmitting unit 12, and an optical multiplexing unit 13.

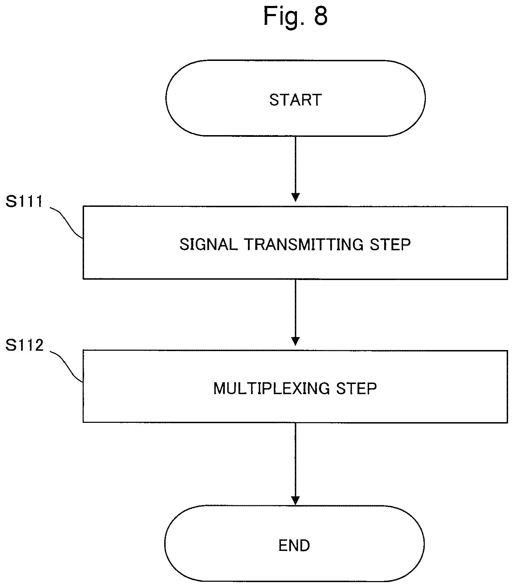

Fig. 8 illustrates an example of an optical transmitting method according to the present exemplary embodiment. The optical transmitting method according to the present exemplary embodiment includes a signal transmitting step Sill and a multiplexing step S112.

In the signal transmitting step Sill, at least one digital coherent signal light Sp and an intensity modulated signal Sd with transient rise time and transient fall time respectively being a constant value or above are transmitted. For example, at least one digital coherent signal transmitting unit 11 transmits a digital coherent signal light Sp. An intensity modulated signal transmitting unit 12 transmits an intensity modulated signal light Sd with transient rise time and transient fall time respectively being a constant value or above.

In the multiplexing step S112, the optical multiplexing unit 13 multiplexes the digital coherent signal light Sp from the digital coherent signal transmitting unit 11 and the intensity modulated signal light Sd from the intensity modulated signal transmitting unit 12. Thus, the optical transmitting device 101 transmits a wavelength multiplexed signal light Sm.

As described above, in the optical transmitting device 101 or the optical transmitting method according to the present exemplary embodiment, the intensity modulated signal light Sd with the transient rise time Tr and the transient fall time Tf respectively determined to be a constant value or above is transmitted to enable the optical receiving device 102 to accommodate a phase fluctuation and a polarization fluctuation. Thus, the optical transmitting device 101 or the optical transmitting method according to the present exemplary embodiment is capable of suppressing degradation of the digital coherent signal light Sp.

The optical transmitting device 101 according to the present exemplary embodiment may be realized by causing a computer to execute the optical transmitting method according to the present exemplary embodiment. In this case, an optical transmitting program according to the present exemplary embodiment causes a computer to execute the signal transmitting step Sill and the multiplexing step S112.

### (Third Exemplary Embodiment)

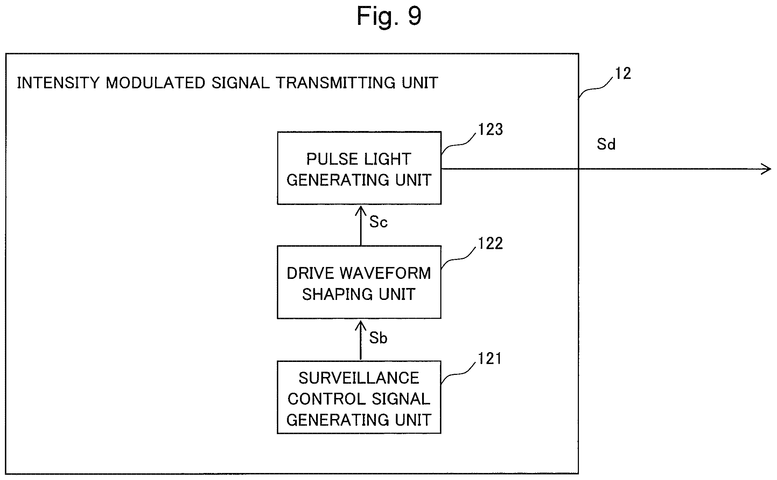

Fig. 9 illustrates an example of an intensity modulated signal transmitting unit 12 according to the present exemplary embodiment. The intensity modulated signal transmitting unit 12 according to the present exemplary embodiment includes a surveillance control signal generating unit 121, a drive waveform shaping unit 122, and a pulse light generating unit 123.

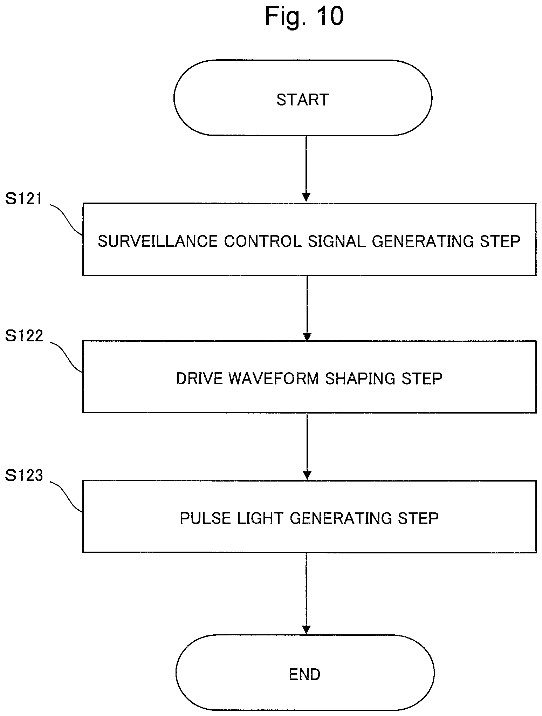

Fig. 10 illustrates an example of a transmitting method of an intensity modulated signal light Sd in a signal transmitting step Sill according to the present exemplary embodiment. The transmitting method of the intensity modulated signal light Sd in the signal transmitting step Sill according to the present exemplary embodiment includes successive steps of a surveillance control signal generating step S121, a drive waveform shaping step S122, and a pulse light generating step S123.

In the surveillance control signal generating step S121, the surveillance control signal generating unit 121 generates a pulse signal Sb carrying information used for surveillance or control. The information used for surveillance or control is used for surveillance or control of the optical fiber transmission line 103.

In the drive waveform shaping step S122, the drive waveform shaping unit 122 shapes a waveform of the pulse signal Sb generated by the surveillance control signal generating unit 121 so as to determine transient rise time and transient fall time of the pulse signal Sb to be a constant value or above, respectively. Thus, a pulse signal Sc with a shaped waveform is output from the drive waveform shaping unit 122.

In the pulse light generating step S123, the pulse light generating unit 123 outputs a pulse light having the same waveform as the pulse waveform of the pulse signal Sb from the drive waveform shaping unit 122 as an intensity modulated signal light Sd. The pulse waveforms of the pulse signal Sb and the intensity modulated signal light Sd may have the same rate or different rates.

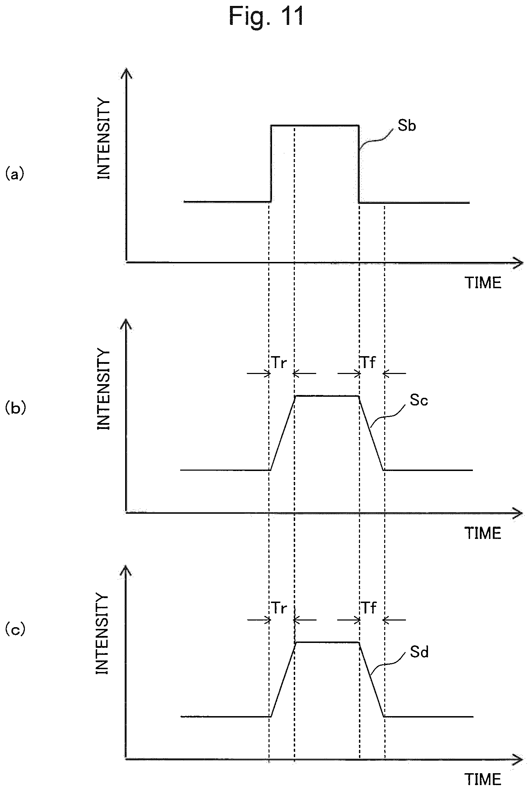

Fig. 11 illustrates examples of signals according to the present exemplary embodiment: Fig. 11 (a) illustrates the pulse signal Sb output from the surveillance control signal generating unit 121, Fig. 11 (b) illustrates the pulse signal Sc output from the drive waveform shaping unit 122, and Fig. 11 (c) illustrates the pulse light Sd output from the pulse light generating unit 123. The pulse signal Sb illustrated in Fig. 7 (a) is an ON/OFF signal having transient rise time and transient fall time of the waveform as short as several hundreds of nsec or below. The pulse signal Sc illustrated in Fig. 7 (b) and the intensity modulated signal light Sd illustrated in Fig. 7 (c) have transient rise time and transient fall time respectively determined to be a constant value or above.

When the drive waveform shaping unit 122 is not included, an intensity modulated signal light Sd output from an intensity modulating unit 3 has a similar form to the pulse signal Sb. Therefore, the transient rise time Tr and the transient fall time Tf of the intensity modulated signal light Sd, become as short as several hundreds of nsec or below, forming a sharp shape. However, since the invention according to the present exemplary embodiment includes the drive waveform shaping unit 122, the transient rise time Tr and the transient fall time Tf of the intensity modulated signal light Sd are respectively determined to be a constant value or above.

As described above, in the optical transmitting device or the optical transmitting method according to the present exemplary embodiment, the intensity modulated signal light Sd with the transient rise time Tr and the transient fall time Tf respectively determined to be a constant value or above is transmitted to enable the optical receiving device 102 to accommodate a phase fluctuation and a polarization fluctuation. Thus, the optical transmitting device 101 or the optical transmitting method according to the present exemplary embodiment is capable of suppressing degradation of the digital coherent signal light Sp.

The intensity modulated signal transmitting unit 12 according to the present exemplary embodiment may be realized by causing a computer to execute the optical transmitting method according to the present exemplary embodiment. In this case, an optical transmitting program according to the present exemplary embodiment causes a computer to execute the successive steps of the surveillance control signal generating step S121, the drive waveform shaping step S122, and the pulse light generating step S123.

### (Fourth Exemplary Embodiment)

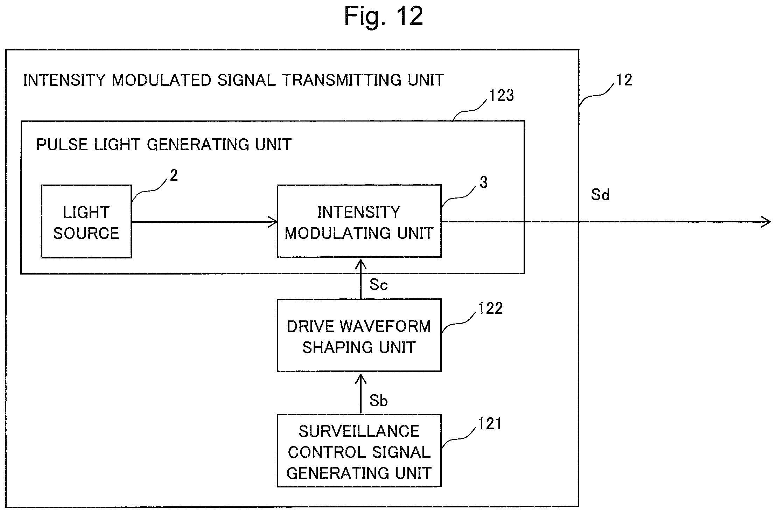

Fig. 12 illustrates an example of an intensity modulated signal transmitting unit 12 according to the present exemplary embodiment. In the intensity modulated signal transmitting unit 12 according to the present exemplary embodiment, a pulse light generating unit 123 includes a light source 2 and an intensity modulating unit 3. The light source 2 generates a continuous light. The intensity modulating unit 3 intensity-modulates the continuous light from the light source 2 with a pulse signal from a drive waveform shaping unit 122. The intensity modulating unit 3 modulates an optical output waveform having the same rate and form as the drive waveform.

In an optical transmitting method according to the present exemplary embodiment, a pulse light is output by intensity-modulating the continuous light from the light source 2 with a pulse signal Sc generated by the drive waveform shaping unit 122 in a pulse light generating step S122. Thus, the pulse light generating unit 123 is able to output an intensity modulated signal light Sd with transient rise time and transient fall time respectively being a constant value or above.

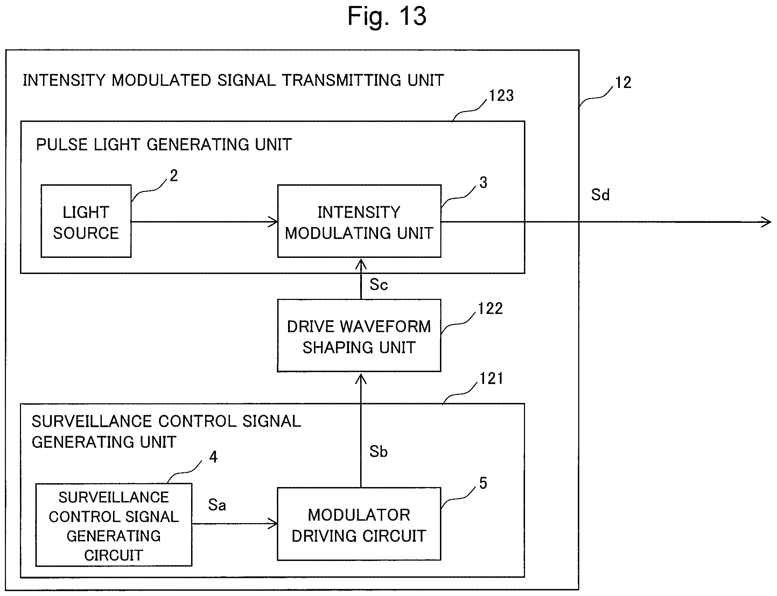

Fig. 13 illustrates another example of the intensity modulated signal transmitting unit 12 according to the present exemplary embodiment. In the intensity modulated signal transmitting unit 12 according to the present exemplary embodiment, a surveillance control signal generating unit 121 includes a surveillance control signal generating circuit 4 and a modulator driving circuit 5.

The surveillance control signal generating circuit 4 generates a surveillance control data Sa.

The modulator driving circuit 5 converts the surveillance control data Sa into a pulse signal Sb being a modulator driving signal. The surveillance control data Sa and the pulse signal Sb are ON/OFF signals illustrated in Fig. 11 (a).

The drive waveform shaping unit 122 shapes a waveform of the pulse signal Sb from the modulator driving circuit 5 so as to determine the transient rise time and the transient fall time of the pulse signal Sb to be a constant value or above, respectively. Thus, the pulse signal Sc with a shaped waveform is output from the drive waveform shaping unit 122.

As described above, in the optical transmitting device or the optical transmitting method according to the present exemplary embodiment, the intensity modulated signal light Sd with the transient rise time Tr and the transient fall time Tf respectively determined to be a constant value or above is transmitted to enable the optical receiving device 102 to accommodate a phase fluctuation and a polarization fluctuation. Thus, the optical transmitting device 101 or the optical transmitting method according to the present exemplary embodiment is capable of suppressing degradation of the digital coherent signal light Sp.

The intensity modulated signal transmitting unit 12 according to the present exemplary embodiment may be realized by causing a computer to execute the optical transmitting method according to the present exemplary embodiment. In this case, an optical transmitting program according to the present exemplary embodiment causes a computer to execute the successive steps of the surveillance control signal generating step S121, the drive waveform shaping step S122, and the pulse light generating step S123.

### (Fifth Exemplary Embodiment)

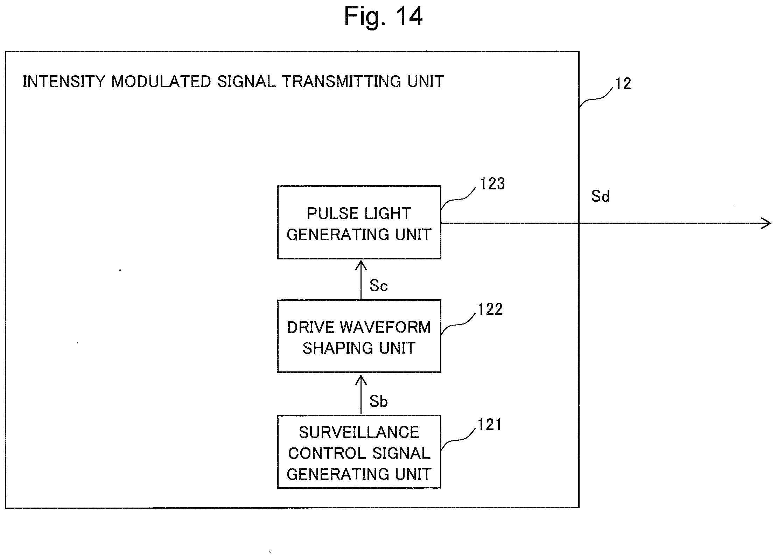

Fig. 14 illustrates an example of an intensity modulated signal transmitting unit 12 according to the present exemplary embodiment. In the intensity modulated signal transmitting unit 12 according to the present exemplary embodiment, a pulse light generating unit 123 is a semiconductor light emitting element.

An optical transmitting method according to the present exemplary embodiment outputs a pulse light in a pulse light generating step S123 by driving the semiconductor light emitting element with a pulse signal having a waveform shaped in a drive waveform shaping unit 122. Thus, an optical intensity modulator can be omitted.

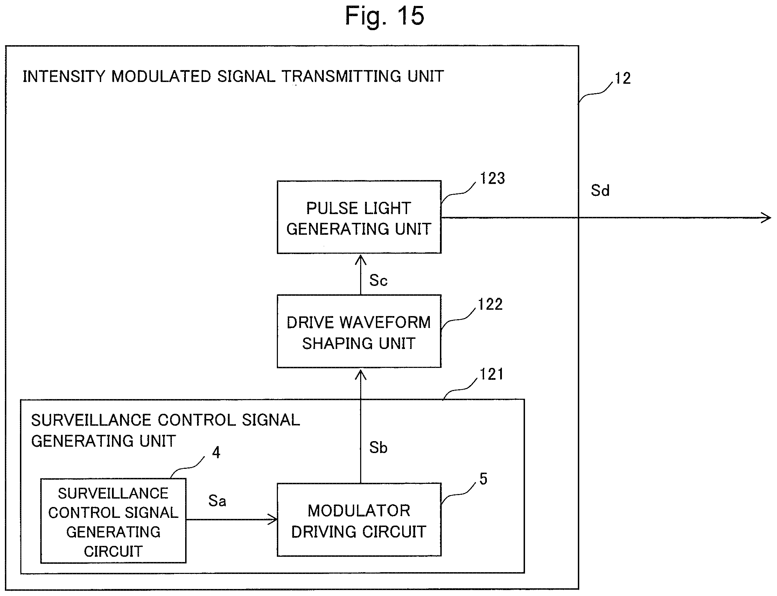

Fig. 15 illustrates another example of the intensity modulated signal transmitting unit 12 according to the present exemplary embodiment. In the intensity modulated signal transmitting unit 12 according to the present exemplary embodiment, a surveillance control signal generating unit 121 includes a surveillance control signal generating circuit 4 and a modulator driving circuit 5. Functions and operations of the surveillance control signal generating circuit 4 and the modulator driving circuit 5 are similar to the fourth exemplary embodiment.

As described above, in the optical transmitting device or the optical transmitting method according to the present exemplary embodiment, the intensity modulated signal light Sd with the transient rise time Tr and the transient fall time Tf respectively determined to be a constant value or above is transmitted to enable the optical receiving device 102 to accommodate a phase fluctuation and a polarization fluctuation. Thus, the optical transmitting device 101 or the optical transmitting method according to the present exemplary embodiment is capable of suppressing degradation of the digital coherent signal light Sp.

The intensity modulated signal transmitting unit 12 according to the present exemplary embodiment may be realized by causing a computer to execute the optical transmitting method according to the present exemplary embodiment. In this case, an optical transmitting program according to the present exemplary embodiment causes a computer to execute the successive steps of the surveillance control signal generating step S121, the drive waveform shaping step S122, and the pulse light generating step S123.

### (Sixth Exemplary Embodiment)

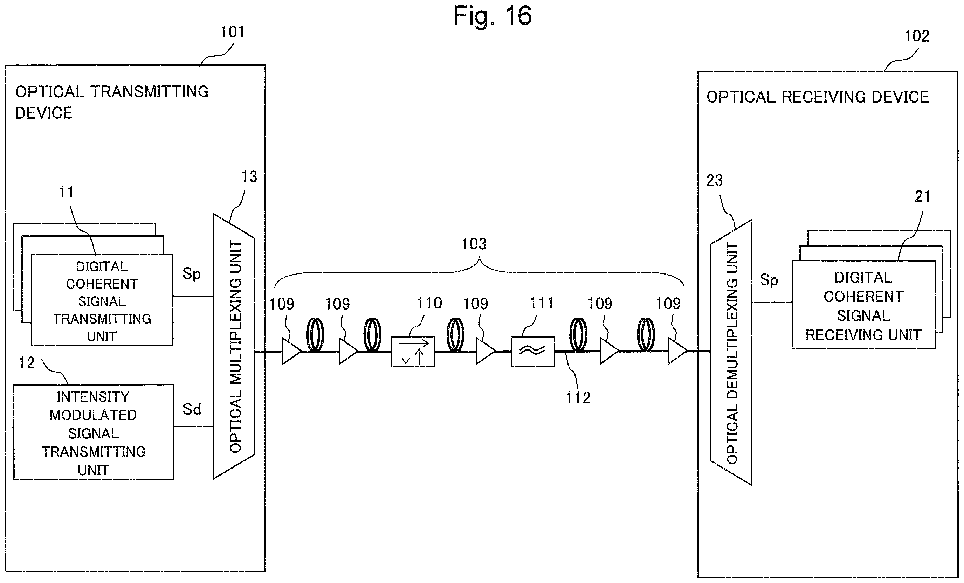

Fig. 16 illustrates an example of an optical communication system according to the present exemplary embodiment. The optical communication system according to the present exemplary embodiment represents an embodiment in which an intensity modulated signal light Sd being used as a surveillance control signal is applied to a fiber-optic transmission system that wavelength-multiplexes at least one digital coherent based main signal for transmission.

An optical transmitting device 101 includes at least one digital coherent signal transmitting unit 11, an intensity modulated signal transmitting unit 12, and an optical multiplexing unit 13. An optical receiving device 102 includes at least one digital coherent signal receiving unit 21 and an optical demultiplexing unit 23.

An optical fiber transmission line 103 includes an optical fiber 112 and an optical amplifier 109. The optical fiber transmission line 103 may further include equipment required for a transmission system, such as a branching and switching device 110 and a gain equalizing device 111. The branching and switching device 110 is used for branching and switching optical paths and feeders. The gain equalizing device 111 is used for shaping an optical spectrum. It is assumed that the present invention is feasible regardless of the quantity, disposition, and presence of equipment on the optical fiber transmission line 103.

An digital coherent signal light Sp transmitted from the digital coherent signal transmitting unit 11 is, for example, a digital coherent optical signal and is used as a main signal. Each digital coherent signal transmitting unit 11 transmits a digital coherent optical signal with a different wavelength from each other. Thus, at least one digital coherent signal transmitting unit 11 transmits an optical main signal based on a digital coherent scheme for a plurality of wavelengths.

The intensity modulated signal light Sd transmitted from the intensity modulated signal transmitting unit 12 is used as a surveillance control signal. The optical multiplexing unit 13 wavelength-multiplexes a main signal with a plurality of wavelengths and a surveillance control signal. The surveillance control signal is used for surveillance or control of equipment on the optical fiber transmission line 103, surveillance of the optical fiber transmission line 103 such as the optical fiber 112, and surveillance or control of the optical fiber transmission line 103 including information communication other than a main signal.

The optical demultiplexing unit 23 demultiplexes the wavelength-multiplexed digital coherent signal light Sp. At least one digital coherent signal receiving unit 21 receives the digital coherent signal light Sp per signal wavelength using a coherent technology and then reconstructs the main signal by a digital receiving process. Thus, the optical receiving device 102 receives the main signal transmitted from the optical transmitting device 101.

The intensity modulated signal light Sd according to the present invention may be applied to a pulse light transmitted with the digital coherent signal light Sp, for any use including equipment control use, transmission line surveillance use, and information communication use other than a main signal, in addition to the equipment surveillance use described in the present exemplary embodiment.

Although the example illustrated in Fig. 16 represents a case of transmitting a digital coherent signal with a plurality of wavelengths, the present invention is applicable to a system transmitting a single wavelength main signal. In this case, the optical demultiplexing unit 108 in the optical receiving device 102 may be omitted. Further, an optical component and a device not illustrated in the present example of application, such as an optical amplifier, may be included in the optical transmitting device 101 and the optical receiving device 102.

While an objective of the aforementioned exemplary embodiments has been described as mitigation of a phase fluctuation and a polarization fluctuation of the main signal wavelength caused by a pulse light, it is assumed that the present invention is applicable to any use for mitigating an impact of a sharp time fluctuation of a pulse light on signal quality of a main signal and a signal quality surveillance function of a receiver.

While the present invention has been described above with reference to the exemplary embodiments, the present invention is not limited to the aforementioned exemplary embodiments. Various changes and modifications which can be understood by those skilled in the art may be made to the configurations and details of the present invention, within the scope of the present invention.

### [Industrial Applicability]

The present invention is applicable to fiber-optic communication.

### [Reference signs List]

- 2: Light source
- 3: Intensity modulating unit
- 4: Surveillance control signal generating circuit
- 5: Modulator driving circuit
- 11: Digital coherent signal transmitting unit
- 12: Intensity modulated signal transmitting unit
- 13: Optical multiplexing unit
- 21: Digital coherent signal receiving unit
- 23: Optical demultiplexing unit
- 101: Optical transmitting device
- 102: Optical receiving device
- 103: Optical fiber transmission line
- 109: Optical amplifier
- 110: Branching and switching device
- 111: Gain equalizing device
- 112: Optical fiber
- 121: Surveillance control signal generating unit
- 122: Drive waveform shaping unit
- 123: Pulse light generating unit

## Claims

1. An optical communication system comprising:
an optical transmitting device (101), including a drive waveform shaping unit (122), configured to generate, using the drive waveform shaping unit (122), an intensity modulated signal light with a transient rise time and a transient fall time being equal to, or above, a predetermined constant value, and configured to transmit a wavelength multiplexed signal light in which the intensity modulated signal light and at least one digital phase modulated optical signal are multiplexed; and
an optical receiving device (102) configured to receive a wavelength multiplexed signal light transmitted from the optical transmitting device, and wherein a signal rate of the intensity modulated signal light is in the order of below MHz, the signal rate of the digital phase modulated optical signal is in the order of Gbps, and the constant value is greater than or equal to 1 µsec.

2. An optical transmitting device suitable for an optical communication system according to claim 1, comprising:
at least one digital coherent signal transmitting unit (11) configured to transmit a digital phase modulated optical signal;
an intensity modulated signal transmitting unit (12), including a drive waveform shaping unit (122), configured to generate, using the drive waveform shaping unit (122), an intensity modulated signal light with a transient rise time and a transient fall time being equal to, or above, a predetermined constant value, and configured to transmit the intensity modulated signal light; and
an optical multiplexing unit (13) configured to multiplex the digital phase modulated optical signal from the digital coherent signal transmitting unit and the intensity modulated signal light from the intensity modulated signal transmitting unit, and wherein a signal rate of the intensity modulated signal light is in the order of below MHz, the signal rate of the digital phase modulated optical signal is in the order of Gpbs, and the constant value is greater than or equal to 1 µsec.

3. The optical transmitting device according to Claim 2, wherein the constant value is longer than a period of a phase fluctuation and a polarization fluctuation of the digital coherent signal light caused by the intensity modulated signal light.

4. The optical transmitting device according to any one of Claims 2 and 3, wherein the intensity modulated signal transmitting unit further comprises:
a surveillance control signal generating unit (121) configured to generate a pulse signal carrying information used for surveillance or control;
wherein the drive waveform shaping unit (122) is configured to shape a waveform of a pulse signal generated by the surveillance control signal generating unit so as to determine transient rise time and transient fall time of the pulse signal to be the constant value or the above value; and
wherein the optical transmitting device further comprises a pulse light generating unit (123) configured to output a pulse light having a same waveform as a pulse signal waveform from the drive waveform shaping unit.

5. The optical transmitting device according to Claim 4, wherein the pulse light generating unit is a semiconductor light emitting element driven by a pulse signal from the drive waveform shaping unit.

6. An optical transmitting method comprising:
a signal transmitting step of transmitting at least one digital phase modulated optical signal, generating, using a drive waveform shaping step, an intensity modulated signal light with a transient rise time and a transient fall time being equal to, or above, a predetermined constant value, and transmitting the intensity modulated signal light; and
a multiplexing step of multiplexing the digital phase modulated optical signal and the intensity modulated signal light transmitted in the signal transmitting step, and wherein a signal rate of the intensity modulated signal light is in the order of below MHz, the signal rate of the digital phase modulated optical signal is in the order of Gbps, and
the constant value is greater than or equal to 1 µsec.

7. The optical transmitting method according to Claim 6, wherein, when transmitting the intensity modulated signal light, the signal transmitting step further comprises the successive steps of:
a surveillance control signal generating step of generating a pulse signal carrying information used for surveillance or control;
a drive waveform shaping step of shaping a waveform of a pulse signal generated in the surveillance control signal generating step so as to determine transient rise time and transient fall time of the pulse signal to be equal to the constant value or above ; and
a pulse light generating step of outputting a pulse light having a same waveform as the pulse signal waveform shaped in the drive waveform shaping step.

8. Computer program comprising instructions to instruct the transmitting device of claims 2-5 to perform the method as claimed in anyone of claims 6 and 7, when these instructions are run by a processor.

## Patentansprüche

1. Optisches Kommunikationssystem, welches aufweist:
eine optische Sendervorrichtung (101), die eine Treiberwellenformgestaltungseinheit (122) enthält, die konfiguriert ist, um mittels der Treiberwellenformgestaltungseinheit (122) ein intenstitätsmoduliertes Signallicht mit einer Übergangsanstiegszeit und einer Übergangsabfallzeit zu erzeugen, die gleich einem vorbestimmten konstanten Wert sind oder darüber liegen, und konfiguriert ist, um ein Wellenlängen-gemultiplextes Signallicht zu senden, in dem das intenstitätsmodulierte Signallicht und mindestens ein digitales phasenmoduliertes optisches Signal gemultiplext sind; und
eine optische Empfängervorrichtung (102), die konfiguriert ist, um das von ein optischen Sendervorrichtung gesendetes Wellenlängen-gemultiplextes Signallicht zu empfangen, und
wobei eine Signalrate des intenstitätsmodulierten Signallichts in der Größenordnung von unterhalb MHz liegt, die Signalrate des digitalen phasenmodulierten optischen Signals in der Größenordnung von Gbps liegt, und der konstante Wert größer als oder gleich 1 µsek ist.

2. Optische Sendervorrichtung, die für ein optisches Kommunikationssystem gemäß Anspruch 1 geeignet ist, wobei sie aufweist:
zumindest eine Digitales-kohärentes-Signal-Sendeeinheit (11), die konfiguriert ist, um ein digitales phasenmoduliertes optisches Signal zu senden;
eine Intensitätsmoduliertes-Signal-Sendeeinheit (12), die eine Treiberwellenformgestaltungseinheit (122) enthält, die konfiguriert ist, um mittels der Treiberwellenformgestaltungseinheit (122) ein intenstitätsmoduliertes Signallicht mit einer Übergangsanstiegszeit und einer Übergangsabstiegszeit zu erzeugen, die gleich einem vorbestimmten konstanten Wert sind oder darüber liegen, und konfiguriert ist, um das intenstitätsmodulierte Signallicht zu senden; und
eine optische Multiplexereinheit (13), die konfiguriert ist, um das digitale phasenmodulierte optische Signal von der Digitales-kohärentes-Signal-Sendeeinheit und das intenstitätsmodulierte Signallicht von der Intensitätsmoduliertes-Signal-Sendeeinheit zu multiplexen,
und wobei eine Signalrate des intenstitätsmodulierten Signallichts in der Größenordnung von unterhalb MHz liegt, die Signalrate des digitalen phasenmodulierten optischen Signals in der Größenordnung von Gbps liegt, und der konstante Wert größer als oder gleich 1 µsek ist.

3. Die optische Sendervorrichtung nach Anspruch 2, wobei der konstante Wert länger als eine Periode einer Phasenfluktuation und einer Polarisationsfluktuation des digitalen kohärenten Signallichts, verursacht durch das intenstitätsmodulierte Signallicht, ist.

4. Die optische Sendervorrichtung nach einem der Ansprüche 2 und 3, wobei die Intensitätsmoduliertes-Signal-Sendeeinheit ferner aufweist:
eine Überwachungssteuersignal-Erzeugungseinheit (121), die konfiguriert ist, um eine Pulssignal-tragende Information zu erzeugen, die zur Überwachung oder Steuerung verwendet wird;
wobei die Treiberwellenformgestaltungseinheit (122) konfiguriert ist, um eine Wellenform eines von der Überwachungssteuersignal-Erzeugungseinheit erzeugten Pulssignals zu gestalten, um eine Übergangsanstiegszeit und eine Übergangsabfallzeit des Pulssignals so zu bestimmen, dass sie der konstante Wert oder der darüber liegende Wert sind; und
wobei die optische Sendervorrichtung ferner eine Pulslichterzeugungseinheit (123) aufweist, die konfiguriert ist, um ein Pulslicht auszugeben, das die gleiche Wellenform wie eine Pulssignalwellenform von der Treiberwellenformgestaltungseinheit hat.

5. Die optische Sendervorrichtung nach Anspruch 4, wobei die Pulslichterzeugungseinheit ein lichtemittierendes Halbleiterelement ist, das durch ein Pulssignal von der Treiberwellenformgestaltungseinheit angetrieben wird.

6. Optisches Sendeverfahren, welches aufweist:
einen Signalsendeschritt zum Senden von zumindest einem digitalen phasenmodulierten optischen Signal, Erzeugen, mittels eines Treiberwellenformgestaltungsschritts, eines intenstitätsmodulierten Signallichts mit einer Übergangsanstiegszeit und einer Übergangsabfallzeit, die gleich einem vorbestimmten konstanten Wert sind oder darüber liegen, und Senden des intenstitätsmodulierten Signallichts; und
einen Multiplexschritt zum Multiplexen des in dem Signalsendeschritt gesendeten digitalen phasenmodulierten optischen Signals und intenstitätsmodulierten Signallichts,
und wobei eine Signalrate des intenstitätsmodulierten Signallichts in der Größenordnung von unterhalb MHz liegt, die Signalrate des digitalen phasenmodulierten optischen Signals in der Größenordnung von Gbps liegt, und der konstante Wert größer als oder gleich 1 µsek ist.

7. Das optische Sendeverfahren nach Anspruch 6, wobei, wenn das intenstitätsmodulierte Signallicht gesendet wird, der Signalsendeschritt ferner die aufeinanderfolgenden Schritte aufweist:
einen Überwachungssteuersignal-Erzeugungsschritt zum Erzeugen einer Pulssignal-tragenden Information, die zur Überwachung oder Steuerung verwendet wird;
einen Treiberwellenformgestaltungsschritt zum Gestalten einer Wellenform eines in dem Überwachungssteuersignal-Erzeugungsschritt erzeugten Pulssignals, um eine Übergangsanstiegszeit und eine Übergangsabfallzeit des Pulssignals so zu bestimmen, dass sie gleich dem konstanten Wert sind oder darüber liegen; und
einen Pulslichterzeugungsschritt zum Ausgeben eines Pulslichts mit der gleichen Wellenform wie die im Treiberwellenformgestaltungsschritt gestaltete Pulssignalwellenform.

8. Computerprogramm, das Anweisungen enthält, um die Sendervorrichtung der Ansprüche 2 bis 5 anzuweisen, das Verfahren durchzuführen, wie es in einem der Ansprüche 6 und 7 beansprucht wird, wenn diese Anweisungen auf einem Prozessor laufen.

## Revendications

1. Système de communication optique comprenant :
un dispositif de transmission optique (101), incluant une unité de mise en forme de forme d'onde d'entraînement (122), configuré pour générer, en utilisant l'unité de mise en forme de forme d'onde d'entraînement (122), une lumière de signal à modulation d'intensité avec un temps de montée transitoire et un temps de descente transitoire supérieurs ou égaux à une valeur constante prédéterminée, et configuré pour transmettre une lumière de signal à multiplexage de longueurs d'onde dans laquelle la lumière de signal à modulation d'intensité et au moins un signal optique à modulation de phase numérique sont multiplexés ; et
un dispositif de réception optique (102) configuré pour recevoir une lumière de signal à multiplexage de longueurs d'onde transmise depuis le dispositif de transmission optique,
et dans lequel un débit de signal de la lumière de signal à modulation d'intensité est inférieur à 1 MHz, le débit de signal du signal optique à modulation de phase numérique est en Gb/s, et la valeur constante est supérieure ou égale à 1 µs.

2. Dispositif de transmission optique adapté à un système de communication optique selon la revendication 1, comprenant :
au moins une unité de transmission de signal numérique cohérent (11) configurée pour transmettre un signal optique à modulation de phase numérique ;
une unité de transmission de signal à modulation d'intensité (12), incluant une unité de mise en forme de forme d'onde d'entraînement (122), configurée pour générer, en utilisant l'unité de mise en forme de forme d'onde d'entraînement (122), une lumière de signal à modulation d'intensité avec un temps de montée transitoire et un temps de descente transitoire supérieurs ou égaux à une valeur constante prédéterminée, et configurée pour transmettre la lumière de signal à modulation d'intensité ; et
une unité de multiplexage optique (13) configurée pour multiplexer le signal optique à modulation de phase numérique provenant de l'unité de transmission de signal numérique cohérent et la lumière de signal à modulation d'intensité provenant de l'unité de transmission de signal à modulation d'intensité,
et dans lequel un débit de signal de la lumière de signal à modulation d'intensité est inférieur à 1 MHz, le débit de signal du signal optique à modulation de phase numérique est en Gb/s, et la valeur constante est supérieure ou égale à 1 µs.

3. Dispositif de transmission optique selon la revendication 2, dans lequel la valeur constante est supérieure à une période d'une fluctuation de phase et d'une fluctuation de polarisation de la lumière de signal numérique cohérente provoquée par la lumière de signal à modulation d'intensité.

4. Dispositif de transmission optique selon l'une quelconque des revendications 2 et 3, dans lequel l'unité de transmission de signal à modulation d'intensité comprend en outre :
une unité de génération de signal de commande de surveillance (121) configurée pour générer un signal d'impulsion portant des informations utilisées pour la surveillance ou la commande ;
dans lequel l'unité de mise en forme de forme d'onde d'entraînement (122) est configurée pour mettre en forme une forme d'onde d'un signal d'impulsion généré par l'unité de génération de signal de commande de surveillance de manière à déterminer qu'un temps de montée transitoire et un temps de descente transitoire du signal d'impulsion sont supérieurs ou égaux à la valeur constante ; et
dans lequel le dispositif de transmission optique comprend en outre :
une unité de génération de lumière d'impulsion (123) configurée pour délivrer une lumière d'impulsion ayant une forme d'onde identique à une forme d'onde de signal d'impulsion depuis l'unité de mise en forme de forme d'onde d'entraînement.

5. Dispositif de transmission optique selon la revendication 4, dans lequel l'unité de génération de lumière d'impulsion est un élément électroluminescent semiconducteur entraîné par un signal d'impulsion provenant de l'unité de mise en forme de forme d'onde d'entraînement.

6. Procédé de transmission optique comprenant :
une étape de transmission de signal permettant la transmission d'au moins un signal optique à modulation de phase numérique, la génération, en utilisant une étape de mise en forme de forme d'onde d'entraînement, d'une lumière de signal à modulation d'intensité avec un temps de montée transitoire et un temps de descente transitoire supérieurs ou égaux à une valeur constante prédéterminée, et la transmission de la lumière de signal à modulation d'intensité ; et
une étape de multiplexage permettant le multiplexage du signal optique à modulation de phase numérique et de la lumière de signal à modulation d'intensité transmise à l'étape de transmission de signal,
et dans lequel un débit de signal de la lumière de signal à modulation d'intensité est inférieur à 1 MHz, le débit de signal du signal optique à modulation de phase numérique est en Gb/s, et la valeur constante est supérieure ou égale à 1 µs.

7. Procédé de transmission optique selon la revendication 6, dans lequel, lors de la transmission de la lumière de signal à modulation d'intensité, l'étape de transmission de signal comprend en outre les étapes successives suivantes :
une étape de génération de signal de commande de surveillance permettant la génération d'un signal d'impulsion portant des informations utilisées pour la surveillance ou la commande ;
une étape de mise en forme de forme d'onde d'entraînement permettant la mise en forme d'une forme d'onde d'un signal d'impulsion généré à l'étape de génération de signal de commande de surveillance de manière à déterminer qu'un temps de montée transitoire et un temps de descente transitoire du signal d'impulsion sont supérieurs ou égaux à la valeur constante ; et
une étape de génération de lumière d'impulsion permettant la délivrance d'une lumière d'impulsion ayant une forme d'onde identique à la forme d'onde de signal d'impulsion mise en forme à l'unité de mise en forme de forme d'onde d'entraînement.

8. Programme informatique comprenant des instructions pour ordonner au dispositif de transmission selon les revendications 2 à 5 d'effectuer le procédé selon l'une quelconque des revendications 6 et 7, lorsque ces instructions sont exécutées par un processeur.
